# EUROPÄISCHE PATENTSCHRIFT

(11) **EP 2 987 057 B1**
(45) Veröffentlichungstag und Bekanntmachung des Hinweises auf die Patenterteilung: **29.08.2018**
(21) Anmeldenummer: 14716871.0
(22) Anmeldetag: 14.04.2014
(51) Int. Cl.: G06F 3/0346

(54) **VERFAHREN ZUM AUSWÄHLEN EINER INFORMATIONSQUELLE AUS EINER MEHRZAHL VON INFORMATIONSQUELLEN ZUR ANZEIGE AUF EINER ANZEIGE EINER DATENBRILLE**
METHOD FOR SELECTING AN INFORMATION SOURCE FROM A PLURALITY OF INFORMATION SOURCES FOR DISPLAY ON A DISPLAY OF DATA SPECTACLES
PROCÉDÉ DE SÉLECTION PARMI UNE PLURALITÉ DE SOURCES D'INFORMATIONS D'UNE SOURCE D'INFORMATION À AFFICHER SUR UN AFFICHEUR D'UNE PAIRE DE LUNETTES INTELLIGENTES

(30) Priorität: 19.04.2013 DE 102013207063
(43) Veröffentlichungstag der Anmeldung: 24.02.2016
(73) Patentinhaber: Bayerische Motoren Werke Aktiengesellschaft, 80809 München (DE)
(72) Erfinder: ENDERS, Martin, 82041 Deisenhofen (DE); KLANNER, Felix, 639664 Singapore (SG); SPIESSL, Wolfgang, 85276 Pfaffenhofen (DE)
(86) Internationale Anmeldenummer: PCT/EP2014/057541
(87) Internationale Veröffentlichungsnummer: WO 2014/170279

(56) Entgegenhaltungen:
- EP-A2- 1 182 541
- US-A1- 2002 044 152
- US-A1- 2012 240 077
- US-A1- 2012 293 325
- Greg Welch ET AL: "Motion Tracking: No Silver Bullat, but a Respectable Arsenal", IEEE Computer Graphics and Applications, 31 December 2002 (2002-12-31), pages 24-38, XP055373333, Retrieved from the Internet: URL:http://www.cise.ufl.edu/research/lok/t eaching/ve-s09/papers/cga02_welch_tracking .pdf [retrieved on 2017-05-16]

## Beschreibung

Die Erfindung betrifft Verfahren zum Auswählen einer Informationsquelle aus einer Mehrzahl von Informationsquellen zur Anzeige auf einer Anzeige einer Datenbrille, eine entsprechende Vorrichtung und ein entsprechendes Computerprogramm.

Heutzutage sind Datenbrillen, manchmal auch Head-mounted Displays, bekannt, die eine Anzeige umfassen. Eine Datenbrille wird durch einen Benutzer ähnlich einer gewöhnlichen Brille, die als Sehhilfe verwendet wird, auf dem Kopf getragen. Die Anzeige der Datenbrille befindet sich dabei im Sichtfeld des Trägers. Manche Datenbrillen umfassen eine Anzeige nur für ein Auge, andere Datenbrillen umfassen zwei Teilanzeigen, wobei jedem Auge eine Teilanzeige zugeordnet ist.

Weiterhin ist es bekannt, dass Datenbrillen eine halbtransparente Anzeige umfassen können. Eine solche Anzeige ermöglicht es dem Träger sowohl angezeigte Informationen als auch das Umfeld hinter der Anzeige zu erkennen. Diese Art an Anzeige ist besonders gut zur kontaktanalogen Darstellung von Informationen geeignet. Bei der kontaktanalogen Darstellung ist der anzuzeigenden Information ein Ort im Umfeld des Trägers zugeordnet und die Information wird diesem Ort zugeordnet angezeigt, manchmal auch als ortsrichtige Anzeige bezeichnet. Dies kann durch eine für den Träger scheinbare Überlagerung der Information über den zugeordneten Ort geschehen oder eine Darstellung der Information in räumlicher Nähe zu dem zugeordneten Ort, ggf. mit einem Symbol wie einer Linie, um auf den zugeordneten Ort zu deuten. Die Information selbst kann ebenfalls ein Symbol, ein Bild, Text oder ähnliches sein. Die kontaktanaloge Darstellung wird manchmal auch augmented reality genannt.

Es sind Datenbrillen bekannt geworden, deren Anzeige nicht im zentralen Sichtfeld des Trägers liegt. Das Sichtfeld und das zentrale Sichtfeld wird durch den Winkelbereich definiert, in dem Menschen typischerweise Gegenstände in ihrem Umfeld wahrnehmen können. Der Winkelbereich wird ausgehend von der zentralen Blickrichtung beim Geradeausschauen (der zentralen Position der Pupillen in Bezug zu den Augenhöhlen) bestimmt. Das zentrale Sichtfeld liegt innerhalb eines Winkelbereiches von 10°, 15°, 20° oder 25° von der zentralen Blickrichtung beim Geradeausschauen. Somit liegen Gegenstände des Umfelds nur dann im zentralen Sichtfeld, wenn sie sich innerhalb eines kegelförmigen Raumes des Umfelds um die zentrale Blickrichtung beim Geradeausschauen herum befinden. Das Sichtfeld, das nicht im zentralen Sichtfeld liegt, wird peripheres Sichtfeld genannt.

Datenbrillen, deren Anzeige nicht im zentralen Sichtfeld des Trägers liegt, sind im Vergleich zu Datenbrillen mit einer Anzeige im zentralen Sichtfeld weniger dazu geeignet, Informationen kontaktanalog darzustellen. Dies liegt daran, dass die Aufmerksamkeit und Wahrnehmung des Umfelds eines Menschen bei einer Tätigkeit eher auf das zentrale Sichtfeld ausgerichtet ist. Datenbrillen, deren Anzeigen nicht im zentralen Sichtfeld des Trägers liegen, bieten sich allerdings insbesondere dazu an, abstrakte Zusatzinformationen dem Träger der Brille bereitzustellen, wie die Uhrzeit oder das Datum.

Dokument US 2002/0044152 A1 offenbart die Integration von virtueller Information mit Bildern der Realität auf einer Anzeige, wie der Anzeige einer Datenbrille.

Dokument US 2012/0293325 A1 offenbart eine mobile Kommunikationsvorrichtung, die dazu angepasst ist, mit einer Mehrzahl von vorbestimmten Quellen zu kommunizieren.

Dokument EP 1 182 541 A1 offenbart ein System zum kombinierten Einsatz verschiedener Display-/Gerätetypen mit einer systemgesteuerten kontextabhängigen Informationsdarstellung.

Die Aufgabe, die der Erfindung zugrundeliegt, ist es, die Anzeige von Informationen durch Datenbrillen zu verbessern, insbesondere für Datenbrillen, deren Anzeige nicht im zentralen Sichtfeld des Trägers liegt.

Diese Aufgabe wird durch die Gegenstände der unabhängigen Ansprüche gelöst. Vorteilhafte Weiterbildungen sind in den abhängigen Ansprüchen definiert.

In einem Aspekt umfasst ein Verfahren zum Bestimmen einer Informationsquelle aus einer Mehrzahl an Informationsquellen zur Anzeige auf einer Datenbrille: Bestimmen der räumlichen Ausrichtung der Datenbrille; Bestimmen eines Kriteriums aus einer Mehrzahl von Kriterien, das von der bestimmten räumlichen Ausrichtung der Datenbrille erfüllt wird, wobei die Kriterien jeweils auf die räumliche Ausrichtung der Datenbrille bezogen sind; wobei jedem Kriterium eine Informationsquelle zugeordnet ist; Auswählen der Informationsquelle, die dem bestimmten Kriterium zugeordnet ist.

Auf diese Weise wird es ermöglicht, dass dem Träger der Datenbrille unterschiedliche Informationen präsentiert werden, abhängig davon, in welcher Ausrichtung sich die Datenbrille befindet. Unterschiedliche Informationsquellen liefern dabei unterschiedliche Informationen, insbesondere unterschiedliche Typen von Informationen, also beispielsweise abstrakte Größen wie die Geschwindigkeit eines Fahrzeugs oder das Videobild einer Kamera.

Häufig kommt es vor, dass unterschiedliche Ausrichtungen des Kopfes einer Person mit unterschiedlichen Tätigkeiten assoziiert sind. Beispielsweise wird an einem typischen Büroarbeitsplatz eine Ausrichtung des Kopfes zur Anzeige eines PCs mit der Bearbeitung der Arbeitsaufgaben der Person zusammenhängen. Wird die Person von einem Kollegen angesprochen, wird sich die Ausrichtung des Kopfes in Richtung des Kollegen ändern, der sich in den allermeisten Fällen nicht in Richtung der Anzeige des PCs befinden wird. Trägt diese Person eine Datenbrille, so wird sich die räumliche Ausrichtung der Datenbrille entsprechend der Kopfbewegung der Person ändern. Dieses wird ausgenutzt, um für die jeweilige Tätigkeit relevante Informationsquellen auszuwählen und der Person auf der Datenbrille anzuzeigen. Beispielsweise kann bei einem Blick zur Anzeige des PC die Uhrzeit eingeblendet werden. Dreht die Person ihren Kopf dann von der Anzeige weg kann bei einem email-Eingang am PC oder einem anstehenden Termin ein Hinweis in der Datenbrille angezeigt werden, der ansonsten auf der Anzeige des PCs erscheint und übersehen werden könnte. Auf diese Weise wird dem Träger der Brille stets eine relevante Information zur Verfügung gestellt durch die Auswahl der Informationsquelle.

Ein weiterer Einsatzbereich für das erfindungsgemäße Verfahren ist beim Führen eines Fahrzeugs. Auch hier sind verschiedene Ausrichtungen des Kopfes häufig mit verschiedenen Tätigkeiten verbunden. Beim Betrachten des Umfelds des Fahrzeugs, insbesondere des vorausliegenden Umfelds, ist der Kopf häufig in einer nahezu horizontalen Ausrichtung. Bedient der Fahrer hingegen eine Funktion des Fahrzeugs, wie ein Radio oder eine Klimaanlage im Armaturenbrett, ist der Kopf des Fahrers häufig nach unten geneigt. Für die unterschiedlichen Ausrichtungen des Kopfes, die mit den unterschiedlichen Tätigkeiten des Fahrers zusammenhängen, können dann Informationen ausgewählt werden, die die Tätigkeit des Fahrers unterstützen. Beispielsweise kann, wenn der Fahrer das Umfeld betrachtet und den Kopf in einer nahezu horizontalen Ausrichtung hält, die Uhrzeit oder die noch zurückzulegende Wegstrecke bis zu einem Routenziel angezeigt werden. Neigt der Fahrer seinen Kopf nach unten zu Bedienelementen des Fahrzeugs, kann die Videoaufnahme einer Frontkamera durch die Anzeige der Datenbrille dargestellt werden. Auf diese Weise kann der Fahrer seiner Aufgabe das Umfeld zu beachten selbst dann zumindest teilweise nachkommen, wenn sein Blick in den Innenraum des Fahrzeugs gerichtet ist.

Alternativ oder zusätzlich ist es möglich, dann wenn der Fahrer den Blick in den Innenraum richtet, Warnungen von Fahrerassistenzsystemen, die die Gefahr einer Kollision erkannt haben, auf der Anzeige der Datenbrille auszugeben.

Das vorgeschlagene Verfahren ist insbesondere dann vorteilhaft, wenn der Träger der Datenbrille diese gemäß der typischen, angenommenen oder bestimmungsgemäßen Tragehaltung verwendet. Die Mehrzahl an Informationsquellen und die Mehrzahl an Kriterien kann aus zwei, drei oder mehr Elementen bestehen. Eines der Kriterien der Mehrzahl von Kriterien kann ein Auffang-Kriterium sein, das immer dann erfüllt ist, wenn kein anderes der Kriterien aus der Mehrzahl der Kriterien erfüllt ist.

Bei der Bestimmung der räumlichen Ausrichtung muss nicht zwangsläufig die vollständige räumliche Ausrichtung in allen drei Raumdimensionen bestimmt werden, es kann ebenfalls genügen beispielsweise die Neigung der Datenbrille zu einer Horizontalen zu bestimmen.

In einer Weiterbildung definiert eines der Kriterien aus der Mehrzahl der Kriterien, dass die Ausrichtung der Datenbrille derart ist, dass der Träger der Brille unter der Annahme einer bestimmungsgemäß getragenen Datenbrille und dem Aufenthalt in einem Fahrzeug das Umfeld des Fahrzeugs betrachtet. Alternativ oder zusätzlich kann ein Kriterium definieren, dass die Ausrichtung der Brille derart ist, dass der Träger der Brille - unter der Annahme einer bestimmungsgemäß getragenen Datenbrille und dem Aufenthalt in einem Fahrzeug - von einem Fahrerassistenzsystem erkannte andere Verkehrsteilnehmer wahrnimmt, mit denen die Gefahr einer Kollision besteht.

In einer anderen Weiterbildung gibt ein Kriterium aus der Mehrzahl der Kriterien einen Richtungsbereich an; wobei der Datenbrille eine Richtung zugeordnet ist; wobei das Verfahren ferner umfasst: Bestimmen der der Datenbrille zugeordneten Richtung anhand der bestimmten räumlichen Ausrichtung der Datenbrille. Ein Richtungsbereich ist ein Bereich an Richtungen, der beispielsweise durch die Angabe von Winkelbereichen ausgehend von dem Kopf des Trägers definiert sein kann. Die Richtungsbereiche können entsprechend der Geometrie zwischen Fenstern des Fahrzeugs und der Position des Kopfes des Trägers definiert werden. Ein Richtungsbereich kann auch durch ein Fahrerassistenzsystem vorgegeben werden, das die Gefahr einer Kollision mit einem anderen Verkehrsteilnehmer oder Objekten erkannt hat und zur Vermeidung der Kollision einen Richtungsbereich bestimmt hat, in den der Fahrer seinen Blick zum Erkennen der Gefahr wenden sollte. Ein Richtungsbereich kann auch nur eine Festlegung eines Bereiches für die horizontale oder vertikale Komponente der zugeordneten Richtung sein. Der Richtungsbereich kann die Einstellungen des Sitzes des Trägers der Datenbrille berücksichtigen, da sich durch diese die Position des Kopfes verändert und damit auch der Richtungsbereich, der eine Betrachtung des Umfelds repräsentiert. Gemäß der Erfindung umfasst die Datenbrille eine Kamera und das Bestimmen der räumlichen Ausrichtung umfasst Folgendes: Empfangen einer Aufnahme der Kamera; Erkennen des Abbildes eines Teils des Innenraums des Fahrzeugs in der Aufnahme; Bestimmen der Position des Abbildes in der Aufnahme; Bestimmen der räumlichen Ausrichtung der Datenbrille anhand der bestimmten Position des Abbildes in der Aufnahme. In dieser Weiterbildung wird die Ausrichtung der Datenbrille somit durch die Auswertung einer Kameraaufnahme gewonnen. Gerade in bekannten Umgebungen wie in einem Innenraum eines Fahrzeugs ist diese Weiterbildung vorteilhaft. Dies deshalb, da die Innenraumansicht des Fahrzeugs bis auf kleine Veränderungen durch in das Fahrzeug verbrachte Gegenstände wohlbekannt ist. Dieses Wissen kann vorteilhaft verwendet werden um mithilfe von Bildverarbeitungen von Aufnahmen der Kamera die Ausrichtung der Datenbrille einfach und genau zu bestimmen. Derartige Verarbeitungsverfahren sind im Stand der Technik bekannt.

Das Erkennen des Abbildes eines Teils des Innenraums des Fahrzeugs in der Aufnahme kann dabei umfassen: Erkennen von Strukturen in der Aufnahme; Vergleichen der erkannten Strukturen in der Aufnahme mit gespeicherten Strukturen des Innenraums des Fahrzeugs. Eine Struktur kann insbesondere durch den Übergang zu Fenstern gebildet werden, oder durch Bedienelemente.

In einer weiteren Variante kann die Datenbrille alternativ oder zusätzlich Lagesensoren umfassen, die dazu eingerichtet sind, die räumliche Lage der Datenbrille zu erfassen, das Bestimmen der räumlichen Ausrichtung der Datenbrille innerhalb eines Fahrzeugs erfolgt dann mithilfe der Lagesensoren. Gemäß der Erfindung umfasst die Mehrzahl an Informationsquellen: eine Videokamera, die in Fahrtrichtung des Fahrzeugs gerichtet ist oder in eine beliebige andere Richtung beispielsweise seitlich des Fahrzeugs oder nach oben, um den Himmel zu betrachten, und eine Informationsverarbeitung, die dazu eingerichtet ist, abstrakte Informationen, insbesondere physikalische Messwerte des Zustands des Fahrzeugs auszugeben, insbesondere die Geschwindigkeit des Fahrzeugs, die Drehzahl eines Antriebs des Fahrzeugs, die Leistungsabgabe des Antriebs des Fahrzeugs oder den Füllzustand des Energiespeichers des Fahrzeugs. Es kann vorgesehen sein, dass mehrere Videokameras vorgesehen sind, zwischen denen der Fahrer bzw. Benutzer umschalten kann, beispielsweise mithilfe einer Bedienfläche an der Datenbrille.

In einer Ausprägung stellt die Anzeige der Datenbrille nur für ein Auge des Trägers der Datenbrille eine Darstellung bereitstellt. Die Anzeige der Datenbrille kann dabei weniger als ein Drittel oder ein Viertel des Sichtfeldes des Auges abdecken und nicht das zentrale Sichtfeld abdecken.

In einem anderen Aspekt umfasst eine Vorrichtung: Mittel zum Bestimmen der räumlichen Ausrichtung der Vorrichtung; Elektronische Verarbeitungsmittel; Wobei die Vorrichtung dazu eingerichtet ist, eines der vorstehenden Verfahren auszuführen. Die elektronischen Verarbeitungsmittel können ein Computer, dedizierte Schaltkreise oder ein Mikrocontroller sein. Die Mittel zum Bestimmen der räumlichen Ausrichtung der Vorrichtung können Lagesensoren sein, oder eine Kamera in der Datenbrille und die elektronischen Verarbeitungsmittel, die programmtechnisch zum Bestimmen der räumlichen Ausrichtung eingerichtet sind. Diese Bestimmung der räumlichen Ausrichtung kann auf der bekannten Struktur des innenraums des Fahrzeugs beruhen, wie oben beschrieben. Die Vorrichtung kann Schnittstellen zu den Informationsquellen aus der Mehrzahl der Informationsquellen umfassen. Diese Schnittstellen können drahtgebunden oder drahtlos sein und geeignete Protokolle zum Datenaustausch umfassen. Derartige Schnittstellen und Protokolle sind im Stand der Technik bekannt.

In einem anderen Aspekt umfasst ein Computerprogramm Anweisungen zum Ausführen eines der vorstehenden Verfahren. Das Computerprogramm kann einen Computer zur Ausführung des Verfahrens veranlassen, wenn dieser die Anweisungen ausführt.

### KURZE BESCHREIBUNG DER ZEICHNUNGEN

Fig. 1 zeigt schematisch eine Datenbrille mit halbtransparenter Anzeige in einem peripheren Sichtfeld gemäß einem Ausführungsbeispiel.
Fig. 2a zeigt schematisch die Datenbrille in einer ersten Ausrichtung gemäß dem Ausführungsbeispiel.
Fig. 2b zeigt schematisch die Datenbrille in einer zweiten Ausrichtung gemäß dem Ausführungsbeispiel.

Gleiche Bezugszeichen beziehen sich auf sich entsprechende Elemente über die Figuren hinweg.

### DETAILLIERTE BESCHREIBUNG DES AUSFÜHRUNGSBEISPIELS

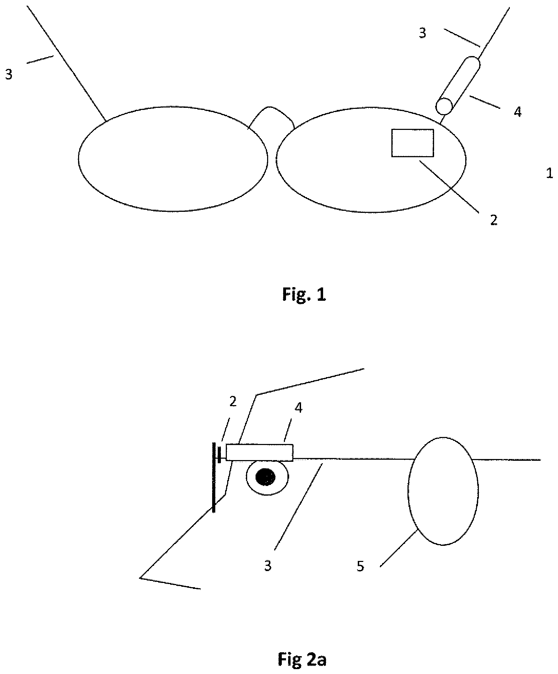

Fig. 1 zeigt schematisch eine Datenbrille 1 mit halbtransparenter Anzeige 2 in einem peripheren Sichtfeld gemäß einem Ausführungsbeispiel. Die Datenbrille 1 umfasst ferner zwei Bügel 3 und eine Kamera 4, die auf einem der Bügel montiert ist. Die Aufnahmerichtung der Kamera entspricht bei einem bestimmungsgemäßen Tragen der Datenbrille 1 der zentralen Blickrichtung des Trägers. Die Kamera 4 kann zusätzlich elektronische Signalverarbeitungsmittel zur Bildverarbeitung umfassen. Die Bügel 3 der Datenbrille 1 liegen beim bestimmungsgemäßen Tragen auf den Ohren 5 des Trägers auf, wie in Fig. 2a gezeigt.

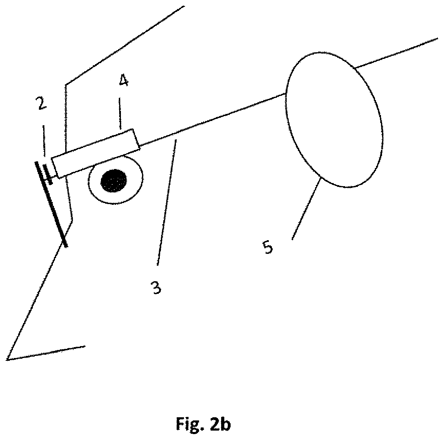

Fig. 2a zeigt schematisch eine Datenbrille 1 in einer ersten Ausrichtung und Fig. 2b zeigt schematisch die Datenbrille 1 in einer zweiten Ausrichtung. Die Haltung des Kopfes des Trägers in Fig. 2a entspricht der Haltung des Kopfes eines Fahrers beim Führen eines Fahrzeugs, wenn der Fahrer das Umfeld des Fahrzeugs betrachtet. Fig. 2b zeigt die Haltung des Kopfes des Fahrers, wenn er Bedienelemente im Armaturenbrett des Fahrzeugs bedient. Der Kopf ist nach unten geneigt. Im Betrieb nimmt die Kamera 4 regelmäßig Aufnahmen auf. Diese werden in einer elektronischen Bildverarbeitung (nicht dargestellt) verarbeitet. Dabei wird versucht in der Aufnahme bekannte und vorgespeicherte Strukturen des Armaturenbretts und der Begrenzungen der Fenster zu erkennen. Wenn Strukturen des Armaturenbretts und der Begrenzungen der Fenster erkannt werden, wird deren Position in der Aufnahme bestimmt. Aus der Position der erkannten Strukturen und Begrenzungen kann auf die Ausrichtung der Datenbrille 1 geschlossen werden. Diese Ausrichtung wird nun mit zwei Kriterien verglichen. Gemäß dem ersten Kriterium wird überprüft, ob die Positionen von erkannten Strukturen oder Fensterbegrenzungen innerhalb eines Positionsbereiches sind, beispielsweise im unteren Drittel der Aufnahme. Dies lässt darauf schließen, dass der Kopf des Fahrers relativ horizontal gehalten wird, so dass der Fahrer das Umfeld betrachten kann. Das zweite Kriterium ist ein Auffang-kriterium, das immer dann erfüllt ist, wenn das erste Kriterium nicht erfüllt ist, es definiert damit, dass die Positionen der erkannten Strukturen und Fensterbegrenzungen in den oberen zwei Dritten der Aufnahme sind (also die Negation aller anderen Kriterien). Wenn das zweite Kriterium erfüllt ist, lässt dies darauf schließen, dass der Fahrer seinen Kopf geneigt hat, um das Armaturenbrett zu betrachten. Jedem Kriterium eine Informationsquelle zugeordnet. Im vorliegenden Fall wird der Erfüllung des ersten Kriteriums die Anzeige der Geschwindigkeit des Fahrzeugs und der Uhrzeit, die ein Bordcomputer bereitstellt, veranlasst. Bei der Erfüllung des zweiten Kriteriums wird die Anzeige des Videobildes einer Frontkamera des Fahrzeugs veranlasst. Auf diese Weise kann der Fahrer, selbst wenn er das Armaturenbrett betrachtet, den vorausliegenden Verkehr zumindest teilweise beachten.

## Patentansprüche

1. Verfahren zum Bestimmen einer Informationsquelle aus einer Mehrzahl an Informationsquellen zur Anzeige auf einer Datenbrille (1), wobei die Datenbrille (1) eine Kamera (4) umfasst; wobei das Verfahren umfasst:
Bestimmen der räumlichen Ausrichtung der Datenbrille (1);
Bestimmen eines Kriteriums aus einer Mehrzahl von Kriterien, die jeweils auf die räumliche Ausrichtung der Datenbrille (1) bezogen sind, das von der bestimmten räumlichen Ausrichtung der Datenbrille (1) erfüllt wird;
wobei jedem Kriterium eine Informationsquelle zugeordnet ist;
Auswählen der Informationsquelle, die dem bestimmten Kriterium zugeordnet ist;
und wobei das Bestimmen der räumlichen Ausrichtung folgendes umfasst:
Empfangen einer Aufnahme der Kamera (4);
Erkennen des Abbildes eines Teils des Innenraums eines Fahrzeugs in der Aufnahme;
Bestimmen der Position des Abbildes oder eines Teils des Abbildes in der Aufnahme;
Bestimmen der räumlichen Ausrichtung der Datenbrille (1) anhand der bestimmten Position des Abbildes oder des Teils des Abbildes in der Aufnahme;
wobei die Mehrzahl an Informationsquellen umfasst:
eine Videokamera, die in Fahrtrichtung des Fahrzeugs oder zur Seite oder nach oben gerichtet ist, und
eine Informationsverarbeitung, die dazu eingerichtet ist, physikalische Messwerte des Zustands des Fahrzeugs auszugeben, insbesondere die Geschwindigkeit des Fahrzeugs, die Drehzahl eines Antriebs des Fahrzeugs, die Leistungsabgabe des Antriebs des Fahrzeugs oder den Füllzustand des Energiespeichers des Fahrzeugs.

2. Verfahren nach Anspruch 1, wobei eines der Kriterien aus der Mehrzahl der Kriterien definiert, dass die Ausrichtung der Datenbrille (1) derart ist, dass der Träger der Brille (1) unter der Annahme einer bestimmungsgemäß getragenen Datenbrille (1) und dem Aufenthalt in einem Fahrzeug das Umfeld des Fahrzeugs betrachtet.

3. Verfahren nach einem der vorhergehenden Ansprüche,
wobei ein Kriterium aus der Mehrzahl der Kriterien einen Richtungsbereich angibt;
wobei der Datenbrille (1) eine Richtung zugeordnet ist;
wobei das Verfahren ferner umfasst:
Bestimmen der der Datenbrille (1) zugeordneten Richtung anhand der bestimmten räumlichen Ausrichtung der Datenbrille (1).

4. Verfahren nach Anspruch 1, wobei das Erkennen des Abbildes eines Teils des Innenraums des Fahrzeugs in der Aufnahme umfasst:
Erkennen von Strukturen in der Aufnahme;
Vergleichen der erkannten Strukturen in der Aufnahme mit gespeicherten Strukturen des Innenraums des Fahrzeugs.

5. Verfahren nach einem der vorhergehenden Ansprüche,
wobei die Datenbrille (1) Lagesensoren umfasst, die dazu eingerichtet sind, die räumliche Lage der Datenbrille (1) zu erfassen,
wobei das Bestimmen der räumlichen Ausrichtung der Datenbrille (1) mithilfe der Lagesensoren erfolgt.

6. Verfahren nach einem der vorhergehenden Ansprüche, wobei die Datenbrille (1) nur für ein Auge des Trägers der Datenbrille (1) eine Anzeige (2) bereitstellt, und wobei insbesondere die Anzeige (2) der Datenbrille (1) weniger als ein Drittel oder ein Viertel des Sichtbereiches des Auges abdeckt und nicht den zentralen Sichtbereich abdeckt.

7. System, umfassend:
eine Datenbrille (1) mit Anzeige und Kamera (4); Mittel zum Bestimmen der räumlichen Ausrichtung der Datenbrille; elektronische Verarbeitungsmittel; eine Videokamera, die in Fahrtrichtung des Fahrzeugs oder zur Seite oder nach oben gerichtet ist,
wobei das System dazu eingerichtet ist, eines der Verfahren nach einem der vorhergehenden Ansprüche auszuführen.

8. Computerprogramm, umfassend Anweisungen zum Ausführen eines Verfahrens nach einem der Ansprüche 1 bis 6 zur Ausführung in einem System nach Anspruch 7.

## Claims

1. A method for determining an information source from a plurality of information sources for display on data spectacles (1), wherein the data spectacles (1) comprise a camera (4); wherein the method comprises:
determining the spatial orientation of the data spectacles (1);
determining a criterion from a plurality of criteria, each relating to the spatial orientation of the data spectacles (1), which is satisfied by the determined spatial orientation of the data spectacles (1);
wherein each criterion is assigned an information source;
selecting the information source that is assigned to the determined criterion;
and wherein the determination of the spatial orientation comprises the following:
receiving a photograph taken by the camera (4);
identifying an image of part of the interior of a vehicle in the photograph;
determining the position of the image or part of the image in the photograph;
determining the spatial orientation of the data spectacles (1) on the basis of the determined position of the image or part of the image in the photograph;
wherein the plurality of information sources comprises:
a video camera, which is directed in the direction of travel of the vehicle or to the side or upwardly, and
an information processing means, which is designed to output physical measurement values of the state of the vehicle, more especially the speed of the vehicle, the rotational speed of a drive of the vehicle, the power output of the drive of the vehicle, or the fill level of the energy store of the vehicle.

2. A method according to claim 1, wherein one of the criteria from the plurality of criteria defines the orientation of the data spectacles (1) such that the wearer of the spectacles (1) views the surroundings of the vehicle, on the assumption that the data spectacles (1) are being worn correctly and remain in a vehicle.

3. A method according to either one of the preceding claims,
wherein a criterion from the plurality of criteria specifies a range of directions,
wherein a direction is assigned to the data spectacles (1);
wherein the method also comprises:
determining the direction assigned to the data spectacles (1) on the basis of the determined spatial orientation of the data spectacles (1).

4. A method according to claim 1, wherein the identification of an image of part of the interior of the vehicle in the photograph comprises:
identifying structures in the photograph;
comparing the identified structures in the photograph with stored structures of the interior of the vehicle.

5. A method according to any one of the preceding claims,
wherein the data spectacles (1) comprise position sensors, which are designed to detect the spatial position of the data spectacles (1),
wherein the spatial orientation of the data spectacles (1) is determined with the aid of the position sensors.

6. A method according to any one of the preceding claims, wherein the data spectacles (1) provide a display (2) for just one eye of the wearer of the data spectacles (1), and wherein more especially the display (2) of the data spectacles (1) covers less than a third or a quarter of the field of view of the eye and does not cover the central field of view.

7. A system, comprising:
data spectacles (1) with a display and camera (4);
means for determining the spatial orientation of the data spectacles;
electronic processing means;
a video camera, which is directed in the direction of travel of the vehicle or to the side or upwardly,
wherein the system is designed to execute one of the methods according to any one of the preceding claims.

8. A computer program, comprising instructions for executing a method according to any one of claims 1 to 6 for execution in a system according to claim 7.

## Revendications

1. Procédé permettant de déterminer une source d'information parmi plusieurs sources d'informations pour effectuer un affichage sur des lunettes d'affichage de données (1), les lunettes d'affichage de données (1) comprenant une caméra (4), ce procédé comprenant des étapes consistant à :
déterminer l'orientation spatiale des lunettes d'affichage de données (1) ; déterminer un critère parmi plusieurs critères respectivement liés à l'orientation spatiale des lunettes d'affichage de données (1) qui est rempli par l'orientation spatiale déterminée des lunettes d'affichage de données (1),
à chaque critère étant associé une source d'information,
sélectionner la source d'information qui est associée au critère déterminé, et la détermination de l'orientation spatiale comprenant les étapes suivantes consistant à :
recevoir une prise de vue de la caméra (4),
identifier l'image d'une partie de l'habitacle d'un véhicule sur la prise de vue,
déterminer la position de l'image ou une partie de l'image sur la prise de vue,
déterminer l'orientation spatiale des lunettes d'affichage de données (1) à partir de la position déterminée de l'image ou de la partie de l'image sur la prise de vue,
les sources d'information comprenant :
une vidéo caméra qui est orientée dans la direction de déplacement du véhicule ou latéralement ou vers le haut, et
un système de traitement d'informations qui est susceptible de délivrer des valeurs de mesure physiques de l'état du véhicule, en particulier la vitesse du véhicule, la vitesse de rotation de l'entraînement du véhicule, la puissance délivrée par l'entraînement du véhicule ou le niveau de remplissage de l'accumulateur d'énergie du véhicule.

2. Procédé conforme à la revendication 1,
selon lequel l'un des critères définit que l'orientation des lunettes d'affichage de données (1) est telle que porteur de ces lunettes (1) regarde l'environnement du véhicule en portant convenablement celles-ci pendant son séjour dans ce véhicule.

3. Procédé conforme à l'une des revendications précédentes selon lequel :
l'un des critères donne une plage d'orientations,
une direction étant associée aux lunettes d'affichage de données (1),
le procédé comprenant en outre une étape consistant à :
déterminer la direction associée aux lunettes d'affichage de données (1) à partir de l'orientation spatiale déterminée des lunettes d'affichage de données (1).

4. Procédé conforme à la revendication 1, selon lequel l'identification de l'image d'une partie de l'habitacle du véhicule dans la prise de vue comprend des étapes consistant à :
identifier des structures dans la prise de vue,
comparer les structures identifiées dans la prise de vue avec des structures mises en mémoire de l'habitacle du véhicule.

5. Procédé conforme à l'une des revendications précédentes, selon lequel :
les lunettes d'affichage de données (1) comprennent des capteurs de position qui sont susceptibles de détecter la position spatiale des lunettes d'affichage de données (1),
la détermination de l'orientation spatiale des lunettes d'affichage de données (1) s'effectuant à l'aide des capteurs de position.

6. Procédé conforme à l'une des revendications précédentes, selon lequel les lunettes d'affichage de données (1) ne fournissent un affichage (2) que pour un oeil du porteur de ces lunettes (1), et, en particulier l'affichage (2) des lunettes d'affichage de données (1) couvre moins d'un tiers ou d'un quart de la plage de vision de l'oeil et pas la plage de vision centrale.

7. Système comprenant :
des lunettes d'affichage de données (1) comprenant un affichage et une caméra (4),
des moyens permettant de déterminer l'orientation spatiale des lunettes d'affichage de données.
des moyens de traitement électronique,
une vidéo caméra qui est orientée dans la direction de déplacement du véhicule, ou latéralement ou vers le haut,
le système étant susceptible de mettre en oeuvre le procédé conforme à l'une des revendications précédentes.

8. Programme d'ordinateur, comprenant des instructions permettant la mise en oeuvre du procédé conforme à l'une des revendications 1 à 6, dans un système conforme à la revendication 7.
